# EUROPEAN PATENT SPECIFICATION

(11) **EP 2 741 460 B1**
(45) Date of publication and mention of the grant of the patent: **26.08.2015**
(21) Application number: 12306520.3
(22) Date of filing: 05.12.2012
(51) Int. Cl.: H04L 29/06, H04L 29/08, H04L 29/12

(54) **A method and a user agent for load balancing within several proxies in a SIP network comprising a router applying network address translation**
Verfahren und Endsystemteil zum Belastungsausgleich innerhalb mehrerer Proxys in einem SIP-Netzwerk mit einem Router mit Netzwerkadressenübersetzung
Procédé et agent d'utilisateur pour équilibrage de charge dans plusieurs proxy sur un réseau SIP comprenant un routeur appliquant la traduction d'adresse de réseau

(43) Date of publication of application: 11.06.2014
(73) Proprietor: ALCATEL LUCENT, 92100 Boulogne-Billancourt (FR)
(72) Inventor: Cayeux, Christian, 67400 Illkirch (FR); Specht, Laurane, 67400 Illkirch (FR)
(74) Representative: Sciaux, Edmond

(56) References cited:
- SRISURESH KUOKOA NETWORKS J KUTHAN FRAUNHOFER INSTITUTE FOKUS J ROSENBERG DYNAMICSOFT A MOLITOR ARAVOX TECHNOLOGIES A RAYHAN RYERS: "Middlebox communication architecture and framework; rfc3303.txt", 20020801, 1 August 2002 (2002-08-01), XP015009080, ISSN: 0000-0003
- JENNINGS C ET AL: "Managing Client Initiated Connections in the Session Initiation Protocol (SIP); draft-ietf-sip-outbound-15.txt", 20080612, vol. sip, no. 15, 12 June 2008 (2008-06-12), XP015056364, ISSN: 0000-0004

## Description

### BACKGROUND OF THE INVENTION

### Field of the invention

The present invention generally relates to a method for load balancing within several proxies, in a telecommunication network using the session initiation protocol (SIP), when the load is destined to a user agent that is linked, to this network, by a router applying a network address translation (NAT) to the Internet protocol (IP) addresses of the data packets destined to this user agent. The NAT allows using, behind the router, addresses that can be chosen independently of the addresses used in the network.

The simplest type of NAT provides a one-to-one translation of IP addresses. In this type of NAT only the IP addresses, IP header checksum and any higher level checksums that include the IP address need to be changed. The rest of the packet can be left untouched. Basic NAT can be used when there is a requirement to interconnect two IP networks with incompatible addressing. It is common to hide an entire IP address space, usually consisting of private IP addresses, behind a single IP address (or in some cases a small group of IP addresses) in another (usually public) address space. To avoid ambiguity in the handling of returned packets, a one-to-many NAT must alter higher level information such as Transmission Control Protocol (TCP)/User Datagram Protocol (UDP) ports in outgoing communications, and must maintain a translation table so that return packets can be correctly translated back. RFC 2663 uses the name network address and port translation for this type of NAT. Other names include: port address translation, IP masquerading, NAT Overload and many-to-one NAT.

### Description of the prior art

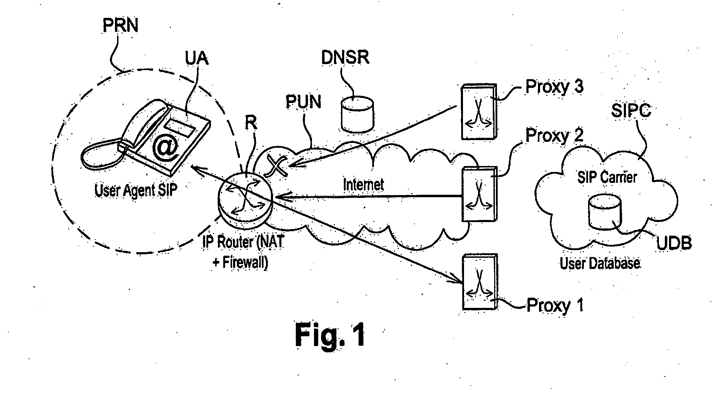

**Figure 1** illustrates the problem of load balancing when there is a router applying NAT. For instance, a phone terminal comprises a SIP user agent UA. It can be connected to the Internet, or to a SIP carrier SIPC for voice communications, through a router R at the edge of an IMS/NGN (Internet protocol Multimedia Subsystem / New Generation Network) like public network PUN. The router R is performing as a network address translator and a firewall

To implement the NAT, several known methods are possible; such as the hosted-NAT traversal solution, or the simple traversal of user datagram protocol (UDP) through network address translator utilities (STUN utilities). The STUN utilities comprise a protocol that allows applications operating behind a network address translator to discover the presence of a network address translator and to obtain the mapped (public) IP address (called NAT address) and the port number that the NAT has allocated for application's user datagram protocol (UDP) connections to remote hosts. The STUN utilities require assistance from a third-party network server (STUN server) located on the opposite side of the NAT, usually the public Internet.

In the example illustrated by **Figure 1**, the SIP carrier SIPC is implementing a load balancing system in order to leverage the use of its infrastructure. For that purpose, it makes use of several SIP proxies: Proxy1, Proxy2 and Proxy3. The Load is dispatched between these three proxies. Standard mechanisms are used to dispatch the load: for instance, it is done through domain name system service (DNS SRV) procedures applied by a domain server DNSR.

When the user agent UA starts (device boot or application launching), it registers at the user data base UDB of the SIP carrier SIPC according to the standardized procedures of RFC3261 and RFC3263. It sends a DNS SRV query: the domain name system (DNS) answers by a message containing addresses that respectively point to the proxies Proxy1, Proxy2 and Proxy3, with a priority order. Then, the SIP user agent UA will send its messages to a proxy alternately chosen among Proxy1, Proxy2 and Proxy3, according to the RFC2782. For instance, let us suppose that the user agent UA has chosen to register at Proxy1.

Now let's consider incoming calls to the user agent UA. Since the user agent UA has sent a REGISTER request to Proxy1, a NAT connection is opened through the router R to allow a reverse path (i. e. from the proxy Proxy1 to the user agent UA).

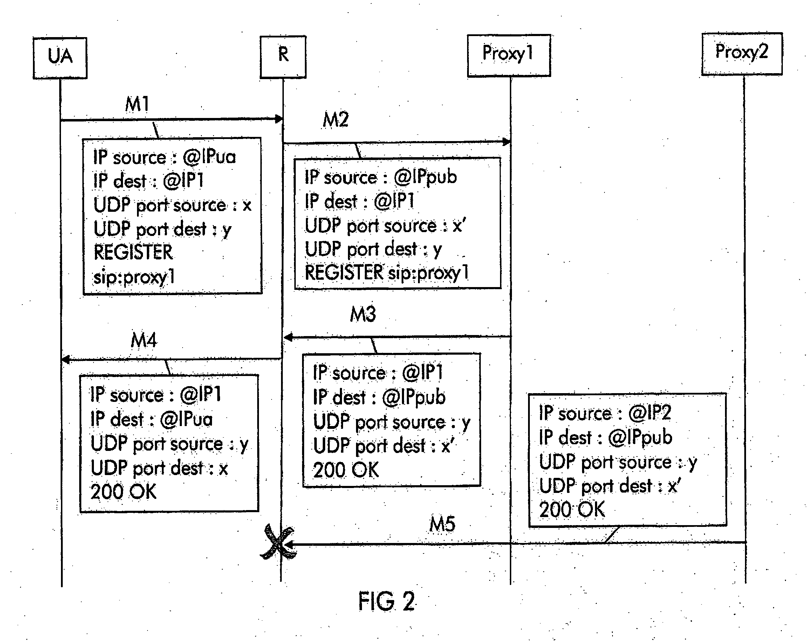

**Figure 2** illustrates the exchanges of SIP messages when a call is emitted from Proxy2, for instance, to the user agent UA, whereas the user agent UA registered in another proxy, Proxy1 in this example:
**Message M1:** The User Agent UA sends a message M1 (REGISTER sip:Proxy1) to the proxy Proxy1 as selected by DNS SRV means. In the message M1, the source IP address and source UDP port are private ones (They respectively are @IPua : x). The destination IP address and destination UDP port are public ones (They respectively are @IP1 : y).
**Message M2:** The router R forwards the content of message M1 (REGISTER sip: proxy1), in a REGISTER message M2, to the destination proxy, Proxy1; but it performs an address translation. In the message M2, the source IP address and source UDP port respectively are (@IPpub : x'). At the same time, the router R opens a reverse path in order that the user agent UA can receive a response.
**Message M3:** The proxy Proxy1 receives the message M2 that requests registering the user agent UA. It answers with a 200 OK message M3. The proxy Proxy1 sends an answer message M3 back to the router R that sent the request message M2. The source IP address and source UDP port respectively are (@IP1 : y). The destination IP address and destination UDP port respectively are (@IPpub : x').
**Message M4:** The router R forwards the content of the message M3 in a 200 OK message M4 to the user agent UA. The router R replaces the destination IP address and destination UDP port respectively by (@IPua : x) according to the NAT.
**Message M5:** Later, the network PUN carries a call to the user agent UA. For load balancing purpose, a request message M5 (INVITE) is emitted from the proxy Proxy2 for instance. The source IP address and source UDP port respectively are (@IP2 : y). The destination IP address and UDP port respectively are (@IPpub : x'). The firewall of the router R rejects the message M5 because the source address @IP2 doesn't match the one, @IP1, registered for the established NAT connection.

So the load balancing is not possible in this example: only the proxy Proxy1, to which the user agent UA has sent the REGISTER message M1-M2, can send SIP messages back.

There are three known alternative solutions for this problem:
- 1. Implementing, in the router R, the method called "full-cone NAT" (also known as one-to-one NAT): Once an internal address (iaddr : iPort) is mapped to an external address (eAddr : ePort), any packet from the address (iAddr : iPort) will be sent through the address (eAddr: ePort). Any external host can send packets to the address (iAddr : iPort) by sending packets to the address (eAddr : ePort). It means that's once the user agent UA has emitted a packet to a proxy, any machine on the Internet can send packets back to the user agent UA. This is a security hole.
- 2. Configuring static port forwarding rules on the router R: This solution is not scalable, because if the SIP carrier changes the address of a proxy, it has to change configuration of all routers.
- 3. Installing a SIP applicative layer gateway in the router R: this gateway will translate, inside each SIP message, all private destination addresses into public destination addresses. It will open a port 5060 available for all proxies into the public space. This solution is not good enough because it means that the router is intrusive into session protocols: A router should only interact on network and transport layers. And it is not a scalable solution because each router on the customer side must be qualified and maintained, including maintenance of the SIP protocol.

Thus, there is a need to provide a better technical solution that will avoid these problems and will allow any proxy of the SIP carrier SIPC to send messages to the user agent UA, for load balancing purpose, although the user agent UA registers in only one proxy.

This can be solved by using the method and the user agent according to the invention.

### SUMMARY OF THE INVENTION

A first object of the invention is a method for load balancing within several proxies in a SIP network comprising a SIP user agent, a domain name server, a user database and an access router applying network address translation; characterized in that it comprises the following steps, made by the user agent:
- sending a DNS SRV request to the domain name server for discovering proxies;
- receiving a DNS response comprising a list of service records providing information on discovered proxies;
- selecting a proxy among the discovered proxies;
- registering at the database of the network by sending a REGISTER request to the selected proxy via the router, this REGISTER request comprising report parameters in order to enable the user agent to discover what public IP address and public UDP port the router has used as a translation of the private source address and private source port contained in this REGISTER request;
- receiving a 200 OK response from the selected proxy via the router (R);
- extracting, from a Via header field contained in this 2000K response, the public IP address and the public UDP port that the router has used as a translation of the source address and source port contained in the REGISTER request;
- and sending a command "AddPortMapping" to the router, by using the UPNP IGD protocol, in order to add a port mapping, on the router, for each discovered proxy, this command requesting the router:
   -- to accept any packet from the corresponding proxy IP address and proxy UDP port, sent to the public IP address and public UDP port of the user agent;
   -- and to forward such a packet to the private IP address and private UDP port of the user agent.

Thanks to the sending of the command "AddPortMapping" to the router, for each discovered proxy, the user agent UA' dynamically establishes a NAT connection on the router R for each of the discovered proxies Proxy1, Proxy2, Proxy3, so that the router accepts any packet from the corresponding proxy IP address and proxy UDP port, sent to the public IP address and public UDP port of the user agent; and forwards such a packet to the private IP address and private UDP port of the user agent.

A second object of the invention is a user agent implementing the steps of this method.

According to a preferred embodiment, the user agent comprises a processor and a set of executable program instructions, which, when executed on the processor, cause the processor to perform all the method steps of the method according to the invention.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar references designate the same or similar components throughout the figures thereof and description, in which:
- Figure 1, described above, represents an exemplary network topology and illustrates the problem of load balancing when there is a router implementing network address translation.
- Figure 2, described above, illustrates the exchanges of SIP messages when a call is emitted from a proxy to a user agent, if the user agent has registered in another proxy, in the exemplary network represented on figure1.

- Figure 3 illustrates the use of an exemplary embodiment of the user agent according to the invention, in a network topology similar to the one represented on Figure 1.
- Figures 4A and 4B illustrate the exchanges of SIP messages corresponding to the steps illustrated by Figure 3.

### DETAILED DESCRIPTION OF THE PREFERRED EMBODIMENTS

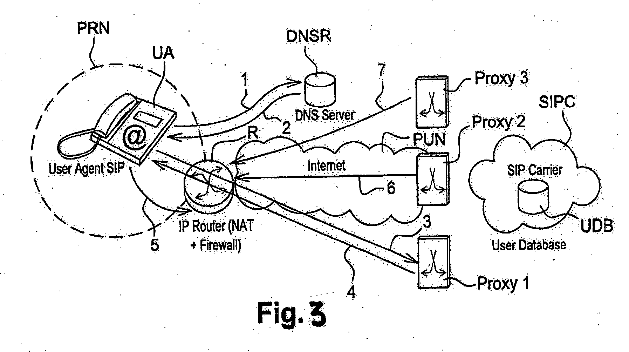

**Figure 3** illustrates the use of an exemplary embodiment UA' of the user agent according to the invention, in a network topology similar to the one represented on Figure 1. This network topology comprises the same entities except that the classical user agent UA is replaced by an embodiment UA' of the user agent according to the invention.

The embodiment UA' of the user agent according to the invention dynamically establishes a NAT connection on the router R. For this purpose it uses the following standardized protocols along with SIP:
⇒ DNS SRV (RFC2782) - A DNS resource record for specifying the location of services.
⇒ UPNP IGD (Universal Plug'n'Play - Internet Gateway Device Protocol).
⇒ SIP (Session Initiation Protocol) :
   ∘ RFC3261: Session Initiation Protocol.
   ∘ RFC3263: Session Initiation Protocol: Locating SIP Servers.
   ∘ RFC3581: An Extension to the Session Initiation Protocol for Symmetric Response Routing.

The user agent UA' is configured for the domain of the SIP carrier.

At **step 1**, as specified by RFC3263, it sends a DNS SRV request message to the domain name server DNSR, for discovering the proxies of the domain of the SIP carrier network SIPN.

At **step 2**, the domain name server DNSR sends a DNS response comprising a list of service records (Also known as SRV records; each SRV record is intended to provide information on an available service). This list represents the list of operational proxies in the domain, with a priority order: Proxy1, Proxy2, Proxy3, in this example.

At **step 3**, the user agent UA' selects a proxy among the discovered proxies Proxy1, Proxy2, Proxy3, identified in the received SRV records. For instance, it selects Proxy1. Then it sends a REGISTER request to Proxy1. This REGISTER request contains the private source address and the private source port of the user agent UA'. A report parameter "rport" is set in the header field "Via" of this REGISTER request: As specified in RFC3581, the parameter "rport" of the header field "Via" tells other elements where to send a response. It enables the user agent UA' to request that the router R send the response back to the source IP address and to the source port where the REGISTER request came from. The "rport" parameter is analogous to the "received" parameter of the SIP header, except that "rport" contains a port number, not the IP address. This parameter "rport" will also enable the user agent UA' to discover what public IP address and public UDP port the router R has used as a translation of the private source address and private source port contained in this REGISTER request.

At **step 4**, the user agent UA' receives a 200 OK response from the proxy Proxy1. It can now learn, from the Via header field contained in this 2000K response, the public IP address and the public UDP port that the router R has used as a translation of the source address and source port contained in the REGISTER request.

At **step 5**, the user agent UA' sends a command "AddPortMapping" to the router R, by using the UPNP IGD protocol, for each discovered proxy Proxy1, Proxy2, Proxy3 listed in the DNS response of step 2. This series of commands will add a port mapping, on the router R, for the discovered proxies Proxy1, Proxy2, Proxy3. This command "AddPortMapping" requests the router (R):
-- to accept any packet from the corresponding proxy IP address and proxy UDP port, sent to the public IP address and public UDP port of the user agent UA';
-- and to forward such a packet to the private IP address and private UDP port of the user agent UA'.

So the user agent UA' dynamically establishes a NAT connection on the router R for each of the discovered proxies Proxy1, Proxy2, Proxy3.

At **steps 6 and 7**, when Proxy2, respectively Proxy3, wants to make a call to the user agent UA', the INVITE request is now accepted by the router R, thanks to the command "AddPortMapping" of step 5.

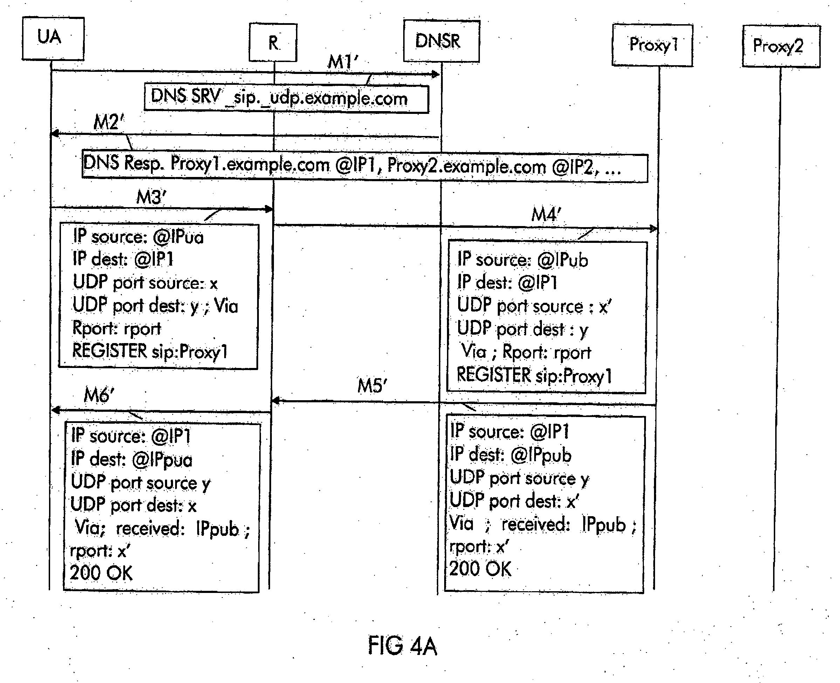

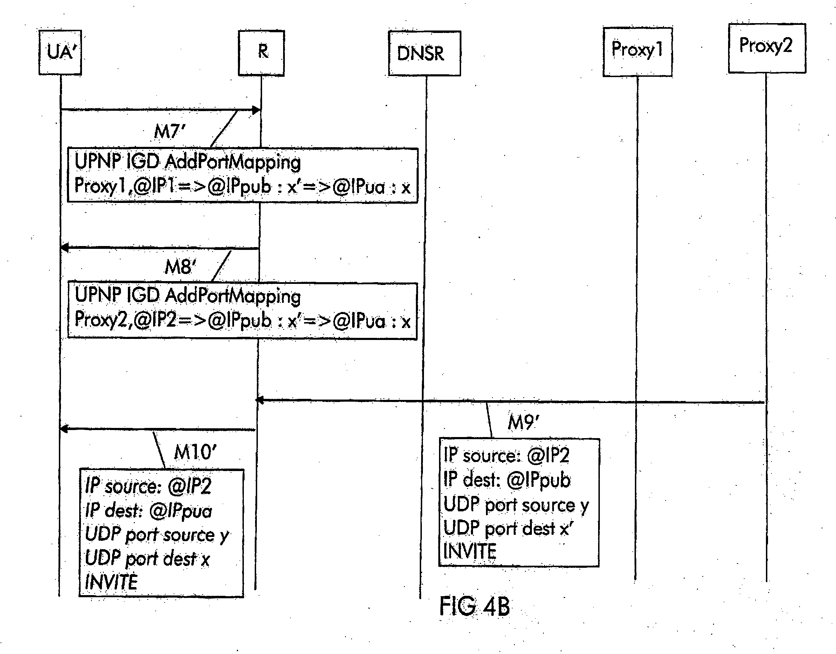

**Figures 4A** **and** **4B** illustrate the exchanges of SIP messages corresponding to the steps illustrated by Figure 3.
**Message M1':** The user agent UA' sends a DNS SRV request to the domain name server DNSR, for discovering the proxies of the domain of the SIP carrier network SIPN. This DNS SRV request requests to retrieve a list of operational proxies.
*DNS SRV _sip._udp.example.* com

**Message M2':** The domain name server DNSR answers to the user agent UA'. The response contains a list of service records respectively containing the names, public IP addresses and public UDP ports of all the proxies Proxy1, Proxy2, Proxy3, of the domain of the SIP carrier network SIPN. Indeed, the user agent UA' can receive requests from any of these proxies.
*DNS Response Proxy1.example.com @IP1, Proxy2.example.com @IP2,*
*Proxy3.example.com* @*IP3*

**Message M3':** Then the user agent UA' registers to the database UDB of the SIP carrier network SIPN by sending a REGISTER request to Proxy1 via the router R, after selecting a proxy upon criteria of DNS SRV data. This REGISTER request comprises report parameters "received" and "rport" set in a header field "Via"
(As specified in RFC3581, the header field "Via" tells other elements where to send a response). These report parameters will respectively enable the user agent UA' to discover what public IP address and public UDP port the router R has used as a translation of the private source address and private source port contained in this REGISTER request.
*IP source: @IPua*
*IP dest: @IP1*
*UDP port source:x*
*UDP port dest y Via*
*Rport: rport*
*REGISTER sip:Proxy1*

**Message M4':** The router R routes the IP messages and makes NAT processing. The private source IP address @IPua of the user agent UA' is translated into a public IP address @IPpub. The private source UDP port x is translated into a public one x'. Meanwhile the router R opens the way back from Proxy1 to the user agent UA', through the firewall. So the content of the message M3' is translated into the content of a message M4' as follows:
*IP source: @IPub*
*IP dest: @IP1*
*UDP port source* x'
*UDP port dest y*
*Via ; Rport : rport*
*REGISTER sip:Proxy1*

**Message M5':** The proxy Proxy1 sends a 2000K response to the user agent UA' via the router R. In this 2000K message, the proxy Proxy1 sets the value of the parameter "rport" to x' and sets the value of a parameter "received" to IPpub. This response is sent to the source of the REGISTER request, i.e. the router R:
*IP source: @IP1*
*IP dest: @IPpub*
*UDP port source : y*
*UDP port dest: x'*
*Via ; received: IPpub ; rport : x'*
*200 OK*

**Message M6':** The router R routes the 200OK response to the user agent UA'. It translates the destination address @IPpub into a private destination address @IPpua.
*IP source: @IP1*
*IP dest: @IPpua*
*UDP port source : y*
*UDP port dest: x*
*Via; received: IPpub ; rport: x'*
*200 OK*

**Message M7':** The user agent UA' extracts, from the 200OK response, the value x' of the parameter "rport" and the value @IPpub of the parameter "received". Then, for each IP address received in the DNS SRV response, it sends a command "AddPortMapping" (part of UPNP IGD protocol) to the router R. Then the router R applies the port mapping for Proxy1. The message M7'concerning the proxy Proxy1 is:
*UPNP IGD AddPortMapping*
*Proxy1, @IP1*=>*@IPpub* : *x'*=>*@IPua:x*

**Message M8':** It concerns the proxy Proxy2:
*UPNP IGD AddPortMapping*
*Proxy2, @IP2* => *@IPpub : x*' => *@IPua :* x

**Message M9':** Later, when the proxy Proxy2 wants to make a call to the user agent UA', it sends an INVITE request.
*IP source: @IP2*
*IP dest: @IPpub*
*UDP port source y*
*UDP port dest x'*
*INVITE*

**Message M10':** This INVITE request is now accepted by the router R, thanks to the command "AddPortMapping" contained in the message M8', The router R translates the public destination address @IPpub into @IPpua, and translates the public destination port x' into x; and then forwards the INVITE message to the user agent UA'.
*IP source: @IP2*
*IP dest: @IPpua*
*UDP port source: y*
*UDP port dest: x*
*INVITE*

This method has several advantages:
⇒ - It still maintains a good level of security, since only declared proxies are allowed to reach the SIP user agent.
⇒ - It is a more scalable solution, since it doesn't need to implement any SIP processing into the access router.
⇒ - It is an easy and plug'n'play solution since no additional configuration procedure is necessary. The only condition is that the access router complies with the Internet Gateway Device Standardized Device Control Protocol.

The method will allow providers whose network is SIP based, to perform load balancing with customer's equipments located behind a NAT router. Without load balancing, all traffic would have to transit over a very limited number of critical proxies elements.

The method dramatically improves the safety of the provided services because:
- Even if a proxy falls out of order, the user SIP equipment is still immediately reachable through an alternate proxy.
- It distributes the load on different network equipments, thus allows better response time.

## Claims

1. A method for load balancing within several proxies (Proxy1, Proxy2, Proxy3) in a session Iniatiation Protocol, SIP, SIPN, comprising a SIP user agent (UA'), a domain name server (DNSR), a user database (UDB) and an access router (R) applying network address translation; **characterized in that** it comprises the following steps, made by the user agent (UA'):
- sending (1) a service record (DNS SRV) request to the domain name server (DNSR) for discovering proxies (Proxy1, Proxy2, Proxy3);
- receiving (2) a DNS response comprising a list of service records providing information on discovered proxies (Proxy1, Proxy2, Proxy3);
- selecting a proxy among the discovered proxies;
- registering (3) at the database (UDB) of the network (SIPN) by sending a REGISTER request to the selected proxy (Proxy1) via the router (R), this REGISTER request comprising report parameters in order to enable the user agent (UA') to discover what public IP address and public User Datagram Protocol, UDP, port the router (R) has used as a translation of the private source address and private source port contained in this REGISTER request;
- receiving (4) a SIP 200 OK response from the selected proxy (Proxy1) via the router (R);
- extracting, from a Via header field contained in this SIP 200 OK response, the public IP address and the public UDP port that the router (R) has used as a translation of the private source address and private source port contained in the REGISTER request;
- and sending (5) a command "AddPortMapping" to the router (R), by using the (*1) , UPNP IGD, protocol, in order to add a port mapping, on the router (R), for each discovered proxy (Proxy1, Proxy2, Proxy3), this command requesting the router (R):
-- to accept any packet from the corresponding proxy IP address and proxy UDP port, sent to the public IP address and public UDP port of the user agent (UA');
-- and to forward such a packet to the private IP address and private UDP port of the user agent (UA').
(*1) Universal Plug'n'Play - Internet Gateway Device Protocol

2. A user agent (UA') for load balancing within several proxies (Proxy1, Proxy2, Proxy3) in a session Initiation Protocol, SIP, (SIPN) comprising SIP network comprising this SIP user agent (UA'), a domain name server (DNSR), a user database (UDB) and an access router (R) applying network address translation; **characterized in that** it comprises a processor configured so that it provides:
- means for sending (1) a service record (DNS SRV) request to the domain name server (DNSR) for discovering proxies (Proxy1, Proxy2, Proxy3);
- means for receiving (2) a DNS response comprising a list of service records providing information on discovered proxies (Proxy1, Proxy2, Proxy3);
- means for selecting a proxy among the discovered proxies;
- means for registering (3) at the database (UDB) of the network (SIPN) by sending a REGISTER request to the selected proxy (Proxy1) via the router (R), this REGISTER request comprising report parameters in order to enable the user agent (UA') to discover what public IP address and public User Datagram Protocol, UDP, port the router (R) has used as a translation of the private source address and private source port contained in this REGISTER request;
- means for receiving (4) a SIP 200 OK response from the selected proxy (Proxy1) via the router (R);
- means for extracting, from a Via header field contained in this SIP 200 OK response, the public IP address and the public UDP port that the router (R) has used as a translation of the private source address and private source port contained in the REGISTER request; (*1)
- and means for sending (5) a command "AddPortMapping" to the router (R), by using the Universal Plug'n'Play - Internet Gateway Device Protocol, UPNP IGD protocol, in order to add a port mapping, on the router (R), for each discovered proxy (Proxy1, Proxy2, Proxy3), this command requesting the router (R):
-- to accept any packet from the corresponding proxy IP address and proxy UDP port, sent to the public IP address and public UDP port of the user agent (UA');
-- and to forward such a packet to the private IP address and private UDP port of the user agent (UA').

3. A digital data storage medium storing a set of machine executable program instructions, which, when executed on a processor, cause the processor to perform all the method steps of the method according to claim 1.

4. A computer program product comprising processor-executable instructions for performing a method when the program is run on a processor, the method comprising the steps of claim 1.

## Patentansprüche

1. Verfahren für einen Lastausgleich mit mehreren Proxys (Proxy1, Proxy 2, Proxy3) in einem Sitzungseinleitungsprotokoll-Netzwerk (Session Initiation Protocol (SIP) Network, SIPN), einen SIP-Benutzeragenten (UA'), einen Domainnamenserver (DNSR), eine Benutzerdatenbank (UDB) und einen die Netzwerkadressenübersetzung vornehmenden Zugangsrouter (R) umfassend, wobei sich das Verfahren durch folgende vom Benutzeragenten (UA') ausgeführten Schritte kennzeichnet:
- Senden (1) einer Service-Record-Anfrage (DNS SRV) an den Domainnamenserver (Domain Name Server Request, DNSR), um die Proxys (Proxy1, Proxy 2, Proxy3) aufzufinden;
- Empfangen (2) einer DNS-Antwort, eine Liste mit Service Records umfassend, die Informationen über die aufgefundenen Proxys (Proxy1, Proxy 2, Proxy3) zur Verfügung stellen;
- Auswählen eines Proxy aus den aufgefundenen Proxys;
- Registrieren (3) in der Datenbank (UDB) des Netzwerks (SIPN) durch senden einer REGISTER-Anfrage über den Router (R) an den ausgewählten Proxy (Proxy1), wobei besagte REGISTER-Anfrage Berichtsparameter umfasst, um den Benutzeragenten (UA') in die Lage zu versetzen, zu entdecken, welche öffentliche IP-Adresse und welchen öffentlichen Port für das User Datagram Protocol (UDP) der Router (R) als Übersetzung der privaten Source-Adresse und des privaten Source-Ports verwendet hat, die in dieser REGISTER-Anfrage enthalten sind;
- Empfangen (4) einer SIP 200 OK-Antwort vom ausgewählten Proxy (Proxy1) über den Router (R);
- Auslesen der öffentlichen IP-Adresse und des öffentlichen UDP-Ports aus dem in der SIP 200 OK-Antwort enthaltenen Via-Headerfeld, die der Router (R) als Übersetzung der privaten Source-Adresse und des privaten Source-Ports verwendet hat, die in der REGISTER-Anfrage enthalten sind;
- und das Senden (5) eines Kommandos "AddPortMapping" an den Router (R) unter Verwendung des Universal Plug-and-Play - Internet Gateway Device-Protokoll Protokolls UPNP IGD, um, auf dem Router (R), für jeden aufgefundenen Proxys (Proxy1, Proxy 2, Proxy3) ein Port Mapping hinzuzufügen, wobei dieses Kommando vom Router (R) anfordert:
-- das Akzeptieren eines jeglichen der Pakete von der entsprechenden Proxy-IP-Adresse und dem entsprechenden Proxy-UDP-Port, die an die öffentliche IP-Adresse und den öffentlichen UDP-Port des Benutzeragenten (UA') gesendet werden;
-- das Weiterleiten eines solchen Pakets an die private IP-Adresse und den privaten UDP-Port des Benutzeragenten (UA').

2. Einen Benutzeragenten (UA') für einen Lastausgleich in mehreren Proxys (Proxy1, Proxy 2, Proxy3) in einem Sitzungseinleitungsprotokoll-Netzwerk (Session Initiation Protocol (SIP) Network, SIPN), diesen Benutzeragenten (User Agent, UA'), einen Domainnamenserver (DNSR), eine Benutzerdatenbank (User Database, UDB) und einen die Netzwerkadressenübersetzung vornehmenden Zugangsrouter (R) umfassend; **dadurch gekennzeichnet, dass** er einen Prozessor beinhaltet, der so konfiguriert ist, dass er folgendes leistet:
- Mittel zum Senden (1) einer Service-Record-Anfrage (DNS SRV) an den Domainnamenserver (Domain Name Server Request, DNSR), um die Proxys (Proxy1, Proxy 2, Proxy3) aufzufinden;
- Mittel zum Empfangen (2) einer DNS-Antwort, eine Liste mit Service Records umfassend, die Informationen über die aufgefundenen Proxys (Proxy1, Proxy 2, Proxy3) zur Verfügung stellen;
- Mittel für die Auswahl der aufgefundenen Proxys;
- Mittel zum Registrieren (3) in der Datenbank (UDB) des Netzwerks (SIPN) durch senden einer REGISTER-Anfrage über den Router (R) an den ausgewählten Proxy (Proxy1), wobei besagte REGISTER-Anfrage Berichtsparameter umfasst, um den Benutzeragenten (UA') in die Lage zu versetzen, zu entdecken, welche öffentliche IP-Adresse und welchen öffentlichen Port für das User Datagram Protocol (UDP) der Router (R) als Übersetzung der privaten Source-Adresse und des privaten Source-Ports verwendet hat, die in dieser REGISTER-Anfrage enthalten sind;
- Mittel zum Empfangen (4) einer SIP 200 OK-Antwort vom ausgewählten Proxy (Proxy1) über den Router (R);
- Mittel für das Auslesen der öffentlichen IP-Adresse und des öffentlichen UDP-Ports aus dem in der SIP 200 OK-Antwort enthaltenen Via-Headerfeld, die der Router (R) als Übersetzung der privaten Source-Adresse und des privaten Source-Ports verwendet hat, die in der REGISTER-Anfrage enthalten sind;
- und Mittel für das Senden (5) eines Kommandos "AddPortMapping" an den Router (R) unter Verwendung des Universal Plug-and-Play - Internet Gateway Device-Protokoll Protokolls UPNP IGD, um, auf dem Router (R), für jeden aufgefundenen Proxys (Proxy1, Proxy 2, Proxy3) ein Port Mapping hinzuzufügen, wobei dieses Kommando vom Router (R) anfordert:
-- das Akzeptieren eines jeglichen der Pakete von der entsprechenden Proxy-IP-Adresse und dem entsprechenden Proxy-UDP-Port, die an die öffentliche IP-Adresse und den öffentlichen UDP-Port des Benutzeragenten (UA') gesendet werden;
-- das Weiterleiten eines solchen Pakets an die private IP-Adresse und den privaten UDP-Port des Benutzeragenten (UA').

3. Ein digitales Speichermedium zur Speicherung eines Sets lauffähiger Maschinenprogramm-Anweisungen, die, wenn durch einen Prozessor ausgeführt, den Prozessor dazu veranlassen, alle Schritte der Methode nach Anspruch 1 auszuführen.

4. Ein Computerprogramm-Produkt, das von einem Prozessor ausführbare Anweisungen zur Durchführung eines Verfahrens umfasst, wenn das Programm auf einem Prozessor ausgeführt wird, wobei das Verfahren die Schritte aus Anspruch 1 umfasst.

## Revendications

1. Procédé pour l'équilibrage de charge dans plusieurs serveurs mandataires (Proxy1, Proxy2, Proxy3) dans un réseau (SIPN) utilisant le protocole d'initiation de session, SIP, comprenant un agent utilisateur SIP (UA'), un serveur de nom de domaine (DNSR), une base de données d'utilisateurs (UDB) et un routeur d'accès (R) appliquant une conversion d'adresse de réseau ; **caractérisé en ce qu'**il comprend les étapes suivantes, exécutées par l'agent utilisateur (UA') :
- envoyer (1) une requête d'enregistrement de service (DNS SRV) au serveur de nom de domaine (DNSR) pour découvrir des serveurs mandataires (Proxy1, Proxy2, Proxy3) ;
- recevoir (2) une réponse DNS comprenant une liste d'enregistrements de service fournissant des informations sur des serveurs mandataires découverts (Proxy1, Proxy2, Proxy3) ;
- sélectionner un serveur mandataire parmi les serveurs mandataires découverts ;
- enregistrer (3) au niveau de la base de données (UDB) du réseau (SIPN) en envoyant une requête REGISTER au serveur mandataire sélectionné (Proxy1) par l'intermédiaire du routeur (R), cette requête REGISTER comprenant des paramètres de rapport afin de permettre à l'agent utilisateur (UA') de découvrir quelle adresse IP publique et quel port public du protocole User Datagram Protocol UDP le routeur (R) a utilisés comme conversion de l'adresse source privée et du port source privé contenus dans cette requête REGISTER ;
- recevoir (4) une réponse SIP 200 OK provenant du serveur mandataire sélectionné (Proxy1) par l'intermédiaire du routeur (R) ;
- extraire, d'un champ d'en-tête Via contenu dans cette réponse SIP 200 OK, l'adresse IP publique et le port UDP public que le routeur (R) a utilisés comme conversion de l'adresse source privée et du port source privé contenus dans la requête REGISTER ;
- et envoyer (5) une commande « AddPortMapping » au routeur (R), en utilisant un dispositif de passerelle Internet utilisant le protocole Universal Plug'n'Play - Internet Gateway Device Protocol, UPNP IGD, afin d'ajouter un mappage de port, sur le routeur (R), pour chaque serveur mandataire découvert (Proxy1, Proxy2, Proxy3), cette commande demandant au routeur (R) :
-- d'accepter tout paquet provenant de l'adresse IP de serveur mandataire correspondante et du port UDP de serveur mandataire, envoyé à l'adresse IP publique et au port UDP public de l'agent utilisateur (UA') ;
-- et de transférer ce paquet vers l'adresse IP privée et le port UDP privé de l'agent utilisateur (UA').

2. Agent utilisateur (UA') pour l'équilibrage de charge dans plusieurs serveurs mandataires (Proxy1, Proxy2, Proxy3) dans un réseau (SIPN) utilisant le protocole d'initiation de session SIP, comprenant cet agent utilisateur (UA') SIP, un serveur de nom de domaine (DNSR), une base de données d'utilisateurs (UDB) et un routeur d'accès (R) appliquant une conversion d'adresse de réseau ; **caractérisé en ce qu'**il comprend un processeur configuré de sorte qu'il fournisse :
- des moyens pour envoyer (1) une requête d'enregistrement de service (DNS SRV) au serveur de nom de domaine (DNSR) pour découvrir des serveurs mandataires (Proxy1, Proxy2, Proxy3) ;
- des moyens pour recevoir (2) une réponse DNS comprenant une liste d'enregistrements de service fournissant des informations sur des serveurs mandataires découverts (Proxy1, Proxy2, Proxy3) ;
- des moyens pour sélectionner un serveur mandataire parmi les serveurs mandataires découverts ;
- des moyens pour enregistrer (3) au niveau de la base de données (UDB) du réseau (SIPN) en envoyant une requête REGISTER au serveur mandataire sélectionné (Proxy1) par l'intermédiaire du routeur (R), cette requête REGISTER comprenant des paramètres de rapport afin de permettre à l'agent utilisateur (UA') de découvrir quelle adresse IP publique et quel port du protocole UDP public le routeur (R) a utilisés comme conversion de l'adresse source privée et du port source privé contenus dans cette requête REGISTER ;
- des moyens pour recevoir (4) une réponse SIP 200 OK provenant du serveur mandataire sélectionné (Proxy1) par l'intermédiaire du routeur (R) ;
- des moyens pour extraire, d'un champ d'en-tête Via contenu dans cette réponse SIP 200 OK, l'adresse IP publique et le port UDP public que le routeur (R) a utilisés comme conversion de l'adresse source privée et du port source privé contenus dans la requête REGISTER ;
- et des moyens pour envoyer (5) une commande « AddPortMapping » au routeur (R), en utilisant le protocole UPnP - dispositif de passerelle Internet, UPNP IGD, afin d'ajouter un mappage de port, sur le routeur (R), pour chaque serveur mandataire découvert (Proxy1, Proxy2, Proxy3), cette commande demandant au routeur (R) :
-- d'accepter tout paquet provenant de l'adresse IP de serveur mandataire correspondante et du port UDP de serveur mandataire, envoyé à l'adresse IP publique et au port UDP public de l'agent utilisateur (UA') ;
-- et de transférer ce paquet vers l'adresse IP privée et le port UDP privé de l'agent utilisateur (UA').

3. Support de stockage de données numériques stockant un ensemble d'instructions de programme exécutables par une machine, qui, lorsqu'elles sont exécutées sur un processeur, entraînent l'exécution par le processeur de toutes les étapes du procédé selon la revendication 1.

4. Produit de programme informatique comprenant des instructions exécutables par un processeur pour mettre en oeuvre un procédé lorsque le programme est exécuté sur un processeur, le procédé comprenant les étapes de la revendication 1.
